# EUROPEAN PATENT SPECIFICATION

(11) **EP 3 093 099 B1**
(45) Date of publication and mention of the grant of the patent: **29.08.2018**
(21) Application number: 16168685.2
(22) Date of filing: 09.05.2016
(51) Int. Cl.: B23K 37/04

(54) **A WELDING MACHINE AND WLEDING METHOD**
SCHWEISSVORRICHTUNG UND SCHWEISSVERFAHREN
DISPOSITIF DE SOUDAGE ET PROCÉDÉ DE SOUDAGE

(30) Priority: 12.05.2015 IT MO20150102
(43) Date of publication of application: 16.11.2016
(73) Proprietor: FIVES OTO S.P.A., 42022 Boretto, Reggio Emilia (IT)
(72) Inventor: MARCHESI, Marco, 42022 Boretto (Reggio Emilia) (IT); ANESI, Andrea, 42049 S. Ilario d'Enza (Reggio Emilia) (IT); MICALI, Luciano, 23824 Dervio (Lecco) (IT); MARCHESINI, Paolo, 42043 Gattatico (Reggio Emilia) (IT)
(74) Representative: Casadei, Giovanni

(56) References cited:
- EP-A1- 2 474 382
- DE-B3- 10 334 739
- JP-A- S61 132 269
- US-A1- 2014 190 950

## Description

The invention relates to a welding machine. In particular, the invention relates to a machine and to a method for the head-to-tail welding of two tapes of a metal material, see e.g. DE 103 34 739 B. Several technological processes for the production of materials are currently employed which provide use of a tape reel of a metallic material as a starting material that is processed in line continuously. Basically, the reel is gradually unwound in a continuous manner and the tape is subjected to subsequent machining operations in line. A typical example of such processes, is the production of longitudinally welded tubes, which occurs with the tape being gradually folded about a longitudinal axis, up to bring the longitudinal edges of the tape in contact with one another, which are then welded together thereby obtaining a tube. When still in line, the tube is sectioned into pieces of a pre-determined length according to known processes.

In order to not interrupt the production continuity, the replacement of an exhausted reel is made by welding the head end of a new reel at the tail end of the former, without the need of having to stop the production line.

In order to implement such head-tail welding, machines are currently used which comprise a bearing plane whereon, via locking means, the head end and the tail end of the to-be-welded reels are positioned. The end edges come to be next one to another and kept at a certain distance to allow penetration of the weld bead throughout the tape thickness. Following positioning and locking of the two to-be-welded ends, welding is performed by one or more welding heads.

In order to prevent the weld bead from protruding laterally to the tape, each welding head does not reach the side edges of the tape, but starts and stops at a certain distance therefrom. This implies that the two ends of the to-be-joint tapes are not welded one to another across the full width, but in contrast, in two zones close to the side edges, the two ends are not welded or are welded in an incomplete manner. It is therefore required to complete the welding of the two ends by hand, in that the incomplete welding zones generate voltage spikes which may easily lead to breakage of the coupling. The manual completion of the welding of course entails a considerable increase in costs and processing times. Alternatively, it is known a welding procedure which provides to place two tags, made of the same material of the tapes, along the side edges of the tapes themselves, straddling the edges to be joined. The welding is then performed along the full width of the tapes, thereby being the tags as well welded to the tapes. In this manner, the welding bead does not protrude beyond the width of the tapes, however it is required to subsequently remove the two tags, which in any case implies a lengthening of the working times.

Further examples of prior art devices, which do not solve effectively the above summarized drawbacks, are disclosed in document US20140190950.

It is an object of the present invention is to provide a welding machine which allows to overcome the drawbacks of the currently available machines.

An advantage of the machine according to the present invention is that the machine is fully automatic.

Another advantage of the machine according to the invention is to allow a complete welding of the tapes, i.e. a welding across the entire width of the tapes, without the need of having to perform any subsequent finishing operation.

A further advantage of the machine according to the present invention is to be able to seamlessly integrate into the production lines currently available on the market.

Further characteristics and advantages of the present invention will better emerge from the detailed description that follows of a preferred embodiment of the invention, illustrated by way of non-limiting example in the appended figures in which:

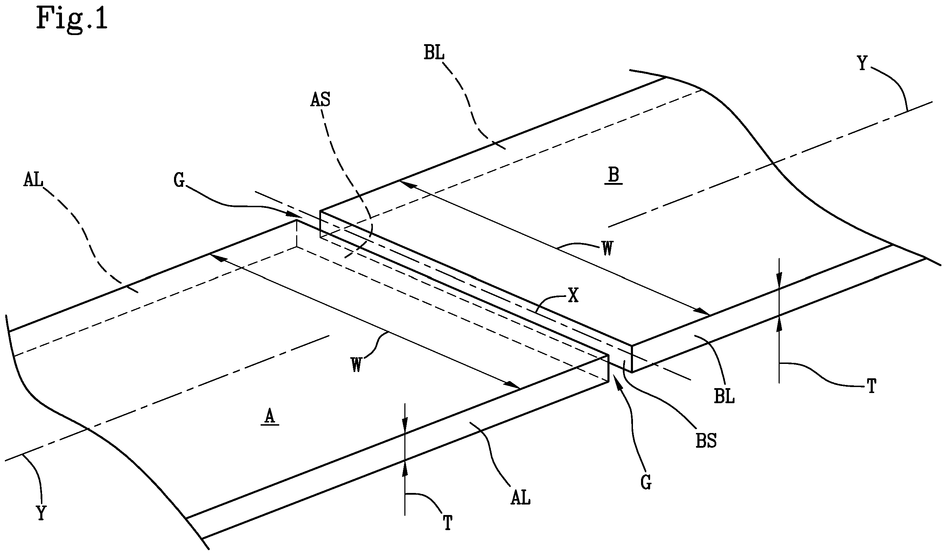

- Figure 1 shows schematically two end portions (A, B) of two tapes to be joint one to another;
- Figure 2 shows a first axonometric view of the machine according to the present invention;
- Figure 3 shows a top view of the machine according to the present invention;

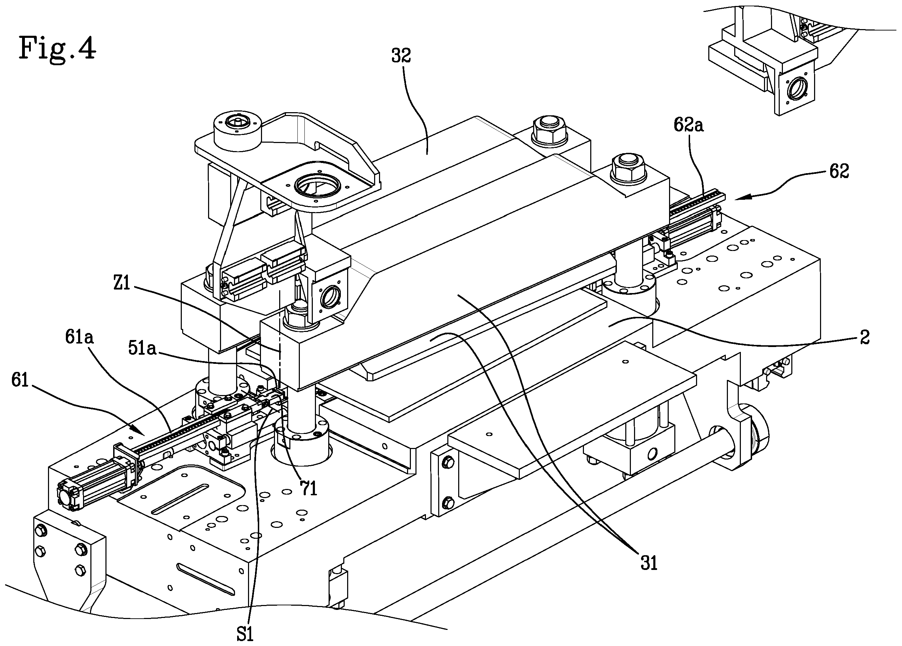

- Figure 4 shows a second axonometric view of the machine according to the present invention, by an angle roughly opposite to that of Figure 2;

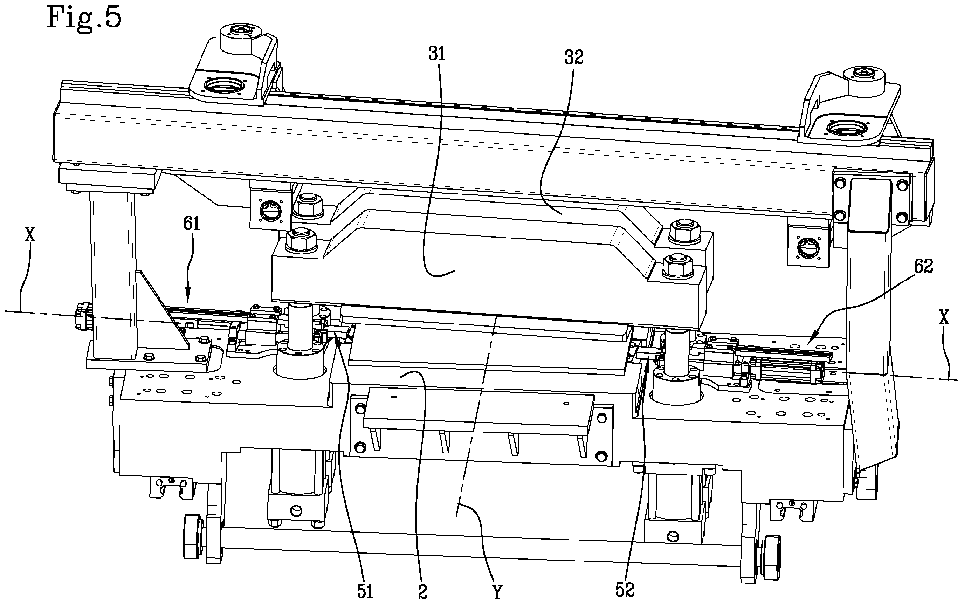

- Figure 5 shows a third axonometric view of the machine according to the present invention, by an angle roughly opposite to that of Figure 2;

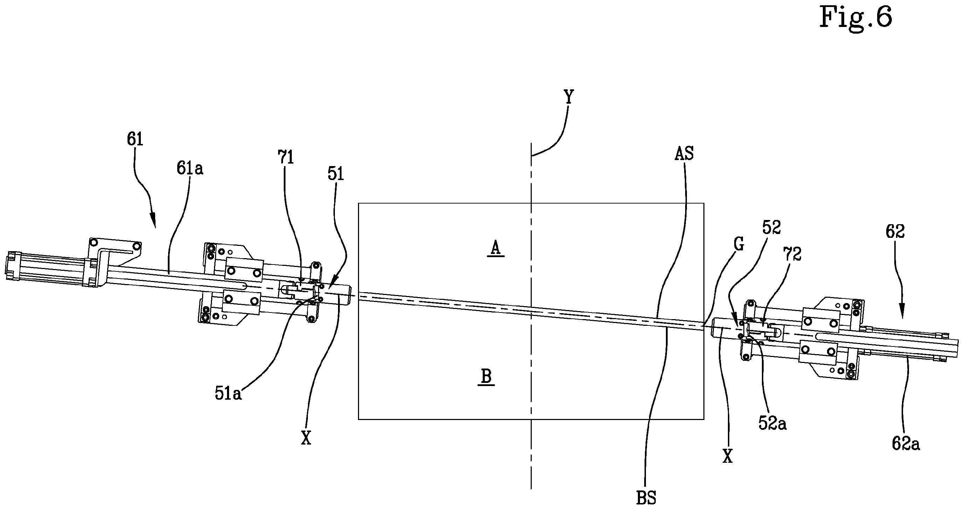

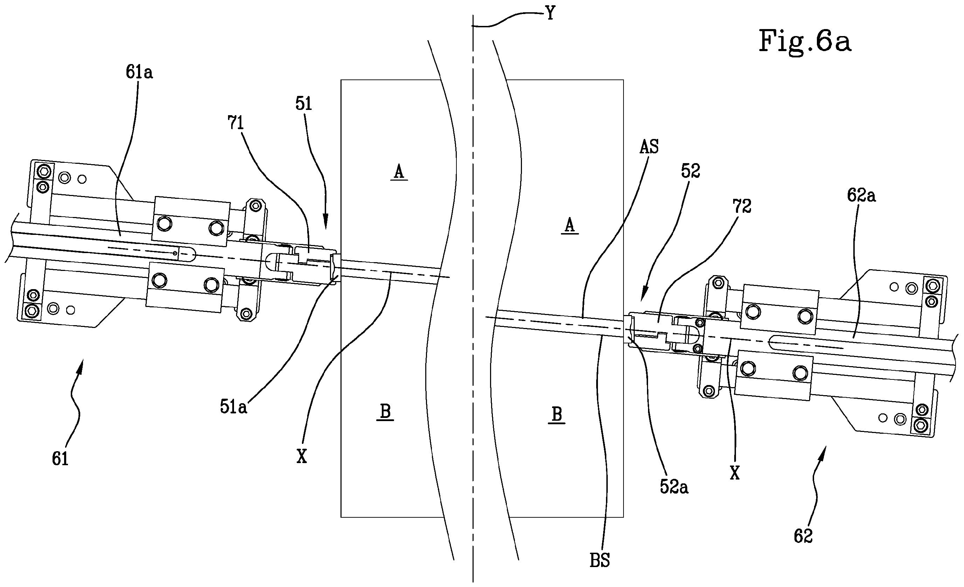

- Figure 6 shows a schematic top view of the machine with some parts thereof removed in order to show the working area;
- Figure 6a shows an enlarged zone of Figure 6.

The welding machine (1) according to the present invention is arranged to allow welding of two end portions (A, B), i.e. a head portion and a tail portion respectively of two tapes which have to be joint together such that a single tape is substantially defined. The two end portions (A, B) each, exhibit an end edge (AS, BS). The end edge is basically an end surface which extends in a direction transverse to a longitudinal axis (Y) of the tape itself, and exhibit a width (W) equal to the width (W) of the tape. The end portions (A, B) further exhibit respective side edges (AL, BL), which are essentially side surfaces parallel to the longitudinal axis (Y). In order to enable the correct execution of the welding, the end edges (AS, BS) must be kept at a determined distance, thereby defining a gap (G) that allows the weld bead to penetrate for the entire thickness (T) of the end portions. Furthermore, the end edges (AS, BS) are not exactly perpendicular to the side edges (AL, BL) and to the longitudinal axis (Y), but are inclined up to a certain extent, such that also the welding bead is not perpendicular to the longitudinal axis (Y).

In the example shown the end portions (A, B) have same thickness and same width. In fact the machine and the procedure herein described perfectly work even for tapes of different thickness. For joining different width tapes it is sufficient to provide an inclined chamfer on the tape with greater width, able to reduce the width thereof to the width of the other tape. Alternatively, the chamfer may be executed after that the end portions have been joined one to another.

The welding machine (1) comprises a bearing plane (2) predisposed to support the end portions (A, B) of the two tapes to be joint to each other at the end edges (AS, BS).

Locking means (31,32) are arranged for locking the end portions (A, B) to be joined to one another, in a pre-determined position. In a preferred embodiment, the locking means (31,32) comprises two pressers (31,32) movable along a direction perpendicular to the bearing plane (2), between an active position, in which the pressers (31,32) press the end portions (A, B) in contact with the bearing plane (2), thereby blocking the latter, and an inactive position, in which they do not press the end portions (A, B) in contact with the bearing plane (2).

Preferably, the two pressers (31,32) are movable along respective vertical guides, for example in the form of vertical rods, which are positioned at the sides of the bearing plane (2). The pressers (31,32) are preferably in the form of horizontal crossbars provided with a pressure surface facing downwards and placed transversely to the longitudinal axis (Y). Motor means, not shown in detail as they are within the reach of those skilled in the art, are arranged for controlling displacement of the pressers (31,32) between the active and inactive positions. In the preferred solution the movement of the pressers (31,32) takes place along a vertical direction.

The machine (1) further comprises at least a welding head (4), which is arranged in order to slide along at least one transverse direction (X) and to perform welding of the end portions (A, B). The motion of the welding head (4) can be controlled by means of motor means which are known for the man skilled in the art. Preferably the transverse direction (X) is parallel to the end edges (AS, BS) of the end portions (A, B). The welding head (4) is represented only schematically as known to the skilled of the art. A plurality of welding heads may be provided (4) which operate in a synchronized manner. In a particularly advantageous embodiment, there are provided two welding heads (4).

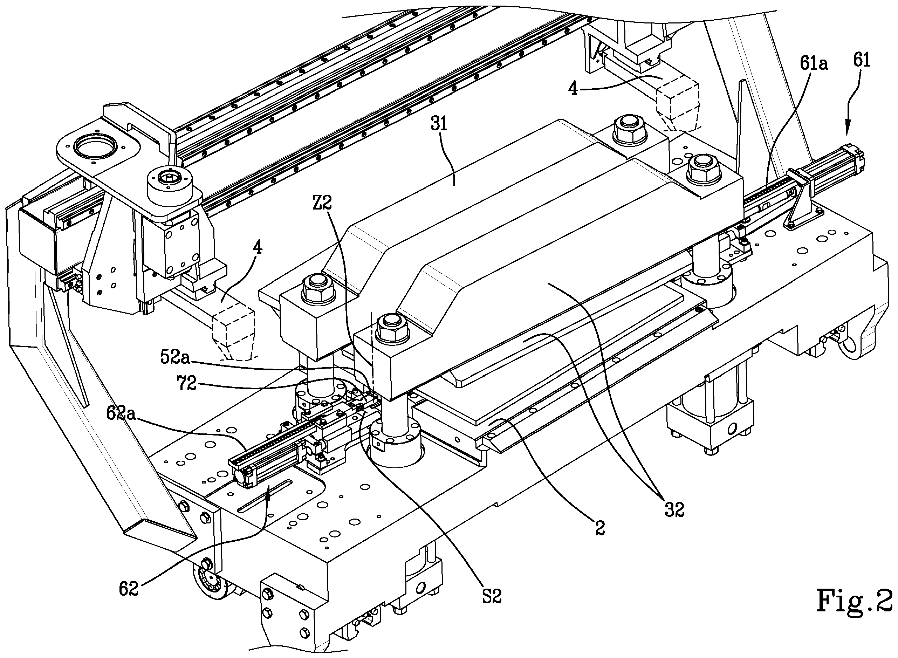

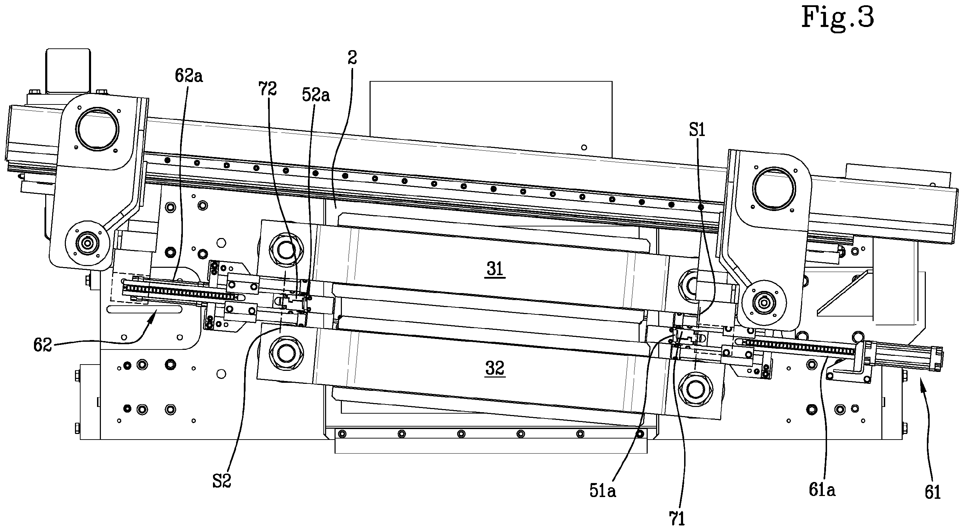

The machine according to the present invention further comprises two containment elements (51,52) being movable so as to assume at least an active position, wherein they are positioned in contact with the opposite side edges (AL, BL) of the end portions (A, B), straddling the end edges (AS, BS). As shown in Figures 2 and 3, in the active position, the containment elements (51,52) substantially define a bank that laterally delimits the end edges (AS, BS). Preferably the containment elements have a height greater than the thickness of the end portions (A, B), and are placed such as to protrude at least partially above of the end portions. In this way, the weld bead running between the end edges (AS, BS), is contained by the containment elements (51,52) within the width (W) of the end portions, or it may not protrude laterally from the end portions. In other words, the gap (G) within which the weld bead is positioned, is delimited laterally by the containment elements (51,52), so that the weld bead can not in any case protrude outside of the side edges (AL, BL) of the end portions (A, B).

Advantageously, the containment elements (51,52), at least in the area intended to come into contact with the weld bead, are made of a non-meltable material at welding temperatures. In this way the containment elements (51,52) do not adhere to the weld bead and, following completion of the welding, they can be removed easily. The containment elements (51,52) can be realized, at least in certain areas, in ceramic or beryllium copper material, or other suitable material.

In a preferred embodiment, each containment element (51,52) comprises an insert (51a, 52a) intended to be positioned in contact of the side edges of the end portions (A, B) straddling the end edges (AS, BS). This insert is intended to come into contact with the weld bead, and is therefore made of a non-meltable material at welding temperatures, for example ceramic material or copper beryllium.

An actuator (61,62) is arranged to move the insert (51a, 52a) between the active position and an inactive position, in which the actuator (61,62) is distant from the end portions (A, B). Preferably each actuator (61,62) is a linear actuator movable along a direction parallel to the bearing plane (2), for example the transverse direction (X).

An attachment element (71,72) is associated to the actuator (61,62) in order to allow a detachable connection of the insert (51a, 52a) to the own actuator (61,62). Removable fastening means, comprising for example one or more fastening screws, are arranged to allow removable locking of each insert (51a, 52a).

Preferably, the attachment element (71,72) is orientable in space in order to allow the insert (51a, 52a) to be arranged parallel to the side edges of the end portions (A, B). In the preferred embodiment, each attachment element (71,72) is free to rotate, within certain limits, about a horizontal axis (S1, S2). In this way, when the inserts (51a, 52a) come into contact with the side edges of the end portions (A, B), the attachment elements (71,72) rotate each about its own horizontal axis (S1, S2) in order to adapt to the position of the side edges of the end portions (A, B), so that the inserts (51a, 52a) come to be parallel in contact with the lateral edges themselves. Further, it is possible to render each insert (51a, 52a) capable of rotating, within predetermined limits, about a vertical axis (Z1, Z2). To this end, between each insert (51a, 52a) and the attachment element (71,72) thereof, a cylindrical surface is interposed which is concentric to the respective vertical axis (Z1, Z2). Each insert is free, within a certain limit, to crawl on the cylindrical surface such as to vary its angular position with respect to its vertical axis (Z1, Z2).

In the preferred embodiment each actuator (61,62) comprises a slidable bar (61a, 62a), at a free end of which the containment element is disposed (51,52). In particular, the free end of each slidable bar (61a, 62a) is associated to an attachment element (71,72). Each attachment element (71,72) is rotatable, within certain limits, about a respective horizontal axis (S1, S2) relative to the end of the slidable bar (61a, 62a). In particular, each attachment element (71,72) comprises a first portion, and a second portion which can be resepctively tightened by means of a fastening screw. Said two tightening portions have a respective insert tightened thereto (51a, 52a) but are not represented in detail as the skilled of the art is perfectly able to find a configuration that is suitable for the purpose.

The welding of the end portions (A, B) of two to-be-joined tapes at the end edges (AS, BS) occurs in the following manner.

First, it is provided to lock the end portions (A, B) on the bearing plane (2), with the end edges (AS, BS) thereof being adjacent and parallel to each other at a given distance. The two end portions (A, B) can be positioned on the bearing plane (2) in an automatic manner. For example, the machine according to the present invention may be arranged along the production line, at a station located upstream of the accumulating station of the tape used in the production cycle. As it is known, the accumulating stations make free the terminal end portion or tail portion of the tape. This end or tail portion, can be locked on the bearing plane (2), by activation of the locking means (31,32). The starting end or head portion of a new tape reel may likewise be locked in the intended position on the bearing plane (2) by activating the locking means.

Following locking of the end portions (A, B), the two containment elements (51,52) may be arranged in contact with the opposite side edges of the end portions (A, B), straddling the end edges (AS, BS). This is done by activating the actuators (61,62) that bring the containment elements in the active position. In this position the containment elements (51,52), and in particular, the inserts (51a, 52a), are in contact with the opposite side edges of the end portions (A, B), straddling the end edges (AS, BS), and laterally delimit the gap defined between the end edges (AS, BS). With the ability to vary its angular position about a horizontal axis and a vertical axis, the inserts (51a, 52a) come to be arranged parallel to the side edges (AL, BL) of the end portions (A, B).

It is therefore possible to weld the end portions (A, B) along the end edges (AS, BS) for the whole extension of the end edges (AS, BS), including side areas in contact with the containment elements (51,52). This is done by activating the welding head (4) or the welding heads (4) that perform the welding along the entire width (W) of the end portions (A, B). The weld bead is contained, within the gap between the end edges (AS, BS), by the containment elements (51,52), without protruding from the side edges of the end portions (A, B).

Following completion of the welding, one may proceed to detach the containment elements (51,52) from the end portions (A, B). The weld bead thus remains co-planar with the side edges of the end portions (A; B), without any subsequent adjustment or finishing machining being needed.

## Claims

1. A welding machine, comprising: a bearing plane (2), predisposed to support the end portions (A, B) of two tapes to be joined together relative to the end edges (AS, BS); locking means (31,32), predisposed for locking the end portions (A, B) to be joined to one another, in a pre-determined position; at least a welding head (4), arranged to slide along at least one transverse direction (X); **characterized in that** it comprises two containment elements (51,52) being movable in order to assume at least an active position, wherein said containment elements (51,52) are positioned in contact with the opposite side edges of the end portions (A, B) straddling the end edges (AS, BS); wherein each containment element (51,52) comprises: an insert (51a, 52a) intended to be positioned in contact with the side edges of the end portions (A, B), straddling the end edges (AS, BS); an actuator (61,62), predisposed for moving the insert (51a, 52a) between an active position and an inactive position, wherein the insert (51a, 52a) is distant from the end portions (A, B);
the welding machine being further **characterised in that** it comprises an attachment element (71,72), associated to the actuator (61,62) to which the insert (51a, 52a) is removably associated, said attachment element (71,72) being orientable in space so as to enable the insert (51a, 52a) to be arranged parallel to the side edges of the end portions (A, B).

2. A welding machine according to claim 1, wherein the containment elements (51,52) are made of a non-meltable material at welding temperatures.

3. A welding machine according to claim 1, wherein each actuator (61,62) is a linear actuator movable along a direction parallel to the support surface (2).

4. A welding machine according to claim 1, wherein the locking means (31,32) comprises two pressers (31,32), movable along a direction perpendicular to the bearing plane (2) between an active position, in which the two pressers (31,32) are pressing the end portions (A, B) in contact with the bearing plane (2) thereby blocking the latter, and an inactive position, wherein said pressers (31,32) are not pressing the end portions (A, B) in contact with the bearing plane (2).

5. A method for welding the end portions (A, B) of two tapes to be joined one to another relative to the end edges (AS, BS), comprising the following steps:
- blocking the end portions (A, B) on a bearing plane (2), with the end edges (AS, BS) juxtaposed and parallel to one another at a determined distance the method **characterised by** the following steps:
- arranging two containment elements (51,52) in contact with the opposite side edges of the end portions (A, B) straddling the end edges (AS, BS);
- welding the end portions (A, B) along the end edges (AS, BS) throughout the length of the end edges (AS, BS), including the side zones being in contact with the containment elements (51,52); wherein each containment element (51,52) comprises: an insert (51 a, 52a) intended to be positioned in contact with the side edges of the end portions (A, B), straddling the end edges (AS, BS); an actuator (61,62), predisposed for moving the insert (51 a, 52a) between an active position and an inactive position, wherein the insert (51 a, 52a) is distant from the end portions (A, B); the method further **characterised in that** each containment element (51,52) comprises an attachment element (71,72), associated to the actuator (61,62) to which the insert (51a, 52a) is removably associated, said attachment element (71,72) being orientable in space so as to enable the insert (51a, 52a) to be arranged parallel to the side edges of the end portions (A, B).

6. A method according to the preceding claim, comprising a step of detaching the containment elements (51,52) from the end portions (A, B), following the step of welding.

## Patentansprüche

1. Schweißmaschine, umfassend: eine Auflageebene (2), die ausgelegt ist, die Endabschnitte (A, B) zweier zu verbindender Bänder relativ zu den Endkanten (AS, BS) zu tragen; Verriegelungsmittel (31, 32), die ausgelegt sind, die miteinander zu verbindenden Endabschnitte (A, B) in einer vorbestimmten Position zu verriegeln; mindestens einen Schweißkopf (4), der angeordnet ist, um entlang mindestens einer Querrichtung (X) zu gleiten; **dadurch gekennzeichnet, dass** sie zwei Einschlusselemente (51, 52) umfasst, die beweglich sind, um mindestens eine aktive Position einzunehmen, wobei die Einschlusselemente (51, 52) in Kontakt mit den gegenüberliegenden Seitenkanten der Endabschnitte (A, B) positioniert sind, die die Endkanten (AS, BS) überspannen;
wobei jedes Einschlusselement (51, 52) umfasst: einen Einsatz (51a, 52a), der dazu bestimmt ist, in Kontakt mit den Seitenkanten der Endabschnitte (A, B) positioniert zu werden und die Endkanten (AS, BS) überspannt; einen Aktuator (61, 62), der ausgelegt ist, den Einsatz (51a, 52a) zwischen einer aktiven Position und einer inaktiven Position zu bewegen, wobei der Einsatz (51a, 52a) von den Endabschnitten (A, B) entfernt ist; wobei die Schweißmaschine ferner
**dadurch gekennzeichnet ist, dass** sie ein
Befestigungselement (71, 72) umfasst, das dem Aktuator (61, 62) zugeordnet ist, dem der Einsatz (51a, 52a) abnehmbar zugeordnet ist, wobei das Befestigungselement (71, 72) im Raum so ausgerichtet werden kann, dass der Einsatz (51a, 52a) parallel zu den Seitenkanten der Endabschnitte (A, B) angeordnet werden kann.

2. Schweißmaschine nach Anspruch 1, wobei die Einschlusselemente (51, 52) aus einem nicht schmelzbaren Material bei Schweißtemperaturen hergestellt sind.

3. Schweißmaschine nach Anspruch 1, wobei jeder Aktuator (61, 62) ein linearer Aktuator ist, der entlang einer Richtung parallel zur Auflagefläche (2) bewegbar ist.

4. Schweißmaschine nach Anspruch 1, wobei die Verriegelungsmittel (31, 32) zwei Pressen (31, 32) umfassen, die entlang einer Richtung senkrecht zur Auflageebene (2) zwischen einer aktiven Position, in der die beiden Pressen (31, 32) die Endabschnitte (A, B) in Kontakt mit der Auflageebene (2) drücken und dadurch diese blockieren, und einer inaktiven Position bewegbar sind, wobei die Pressen (31, 32) die Endabschnitte (A, B) nicht in Kontakt mit der Auflageebene (2) drücken.

5. Verfahren zum Verschweißen der Endabschnitte (A, B) zweier zu verbindender Bänder relativ zu den Endkanten (AS, BS), umfassend die folgenden Schritte:
- Blockieren der Endabschnitte (A, B) auf einer Auflageebene (2), wobei die Endkanten (AS, BS) in einem bestimmten Abstand nebeneinander und parallel zueinander angeordnet sind; wobei das Verfahren durch die folgenden Schritte gekennzeichnet ist:
- Anordnen von zwei Einschlusselementen (51, 52) in Kontakt mit den gegenüberliegenden Seitenkanten der Endabschnitte (A, B), die die Endkanten (AS, BS) überspannen;
- Schweißen der Endabschnitte (A, B) entlang der Endkanten (AS, BS) über die gesamte Länge der Endkanten (AS, BS), einschließlich der Seitenbereiche, die mit den Einschlusselementen (51, 52) in Kontakt sind;
wobei jedes Einschlusselement (51, 52) umfasst: einen Einsatz (51a, 52a), der dazu bestimmt ist, in Kontakt mit den Seitenkanten der Endabschnitte (A, B) positioniert zu werden und die Endkanten (AS, BS) überspannt; einen Aktuator (61, 62), der ausgelegt ist, den Einsatz (51a, 52a) zwischen einer aktiven Position und einer inaktiven Position zu bewegen, wobei der Einsatz (51a, 52a) von den Endabschnitten (A, B) entfernt ist; wobei das Verfahren ferner
gekennzeichnet ist, dass jedes Einschlusselement (51, 52) ein Befestigungselement (71, 72) umfasst, das dem Aktuator (61, 62) zugeordnet ist, dem der Einsatz (51a, 52a) abnehmbar zugeordnet ist, wobei das Befestigungselement (71, 72) im Raum so ausgerichtet werden kann, dass der Einsatz (51a, 52a) parallel zu den Seitenkanten der Endabschnitte (A, B) angeordnet werden kann.

6. Verfahren nach dem vorhergehenden Anspruch, umfassend einen Schritt des Lösens der Einschlusselemente (51, 52) von den Endabschnitten (A, B) nach dem Schritt des Schweißens.

## Revendications

1. Machine à souder, comprenant : un plan d'appui (2) prédisposé pour supporter les parties d'extrémité (A, B) de deux bandes à assembler par rapport aux bords d'extrémité (AS, BS) ; des moyens de blocage (31, 32) prédisposés pour bloquer les parties d'extrémité (A, B) à joindre l'une à l'autre, dans une position prédéterminée ; au moins une tête de soudage (4) disposée pour coulisser le long d'au moins une direction transversale (X) ; **caractérisée en ce qu'**elle comprend deux éléments de contenance (51, 52) étant mobiles afin d'adopter au moins une position active, dans lequel lesdits éléments de contenance (51, 52) sont positionnés en contact avec les bords latéraux opposés des parties d'extrémité (A, B) chevauchant les bords d'extrémité (AS, BS) ;
dans lequel chaque élément de contenance (51, 52) comprend : un insert (51a, 52a) prévu pour être positionné en contact avec les bords latéraux des parties d'extrémité (A, B), chevauchant les bords d'extrémités (AS, BS) ; un actionneur (61, 62) prédisposé pour déplacer l'insert (51a, 52a) entre une position active et une position inactive, dans lequel l'insert (51a, 52a) est distant des parties d'extrémité (A, B) ; la machine à souder étant de plus **caractérisée en ce qu'**elle comprend un
élément de fixation (71, 72) associé à l'actionneur (61, 62) auquel l'insert (51a, 52a) est associé de façon amovible, ledit élément de fixation (71, 72) étant orientable dans l'espace de manière à permettre à l'insert (51a, 52a) d'être disposé parallèlement aux bords latéraux des parties d'extrémité (A, B).

2. Machine à souder selon la revendication 1, dans laquelle les éléments de contenance (51, 52) sont constitués d'un matériau non fusible à des températures de soudage.

3. Machine à souder selon la revendication 1, dans laquelle chaque actionneur (61, 62) est un actionneur linéaire mobile le long d'une direction parallèle à la surface d'appui (2).

4. Machine à souder selon la revendication 1, dans laquelle les moyens de blocage (31, 32) comprennent deux presseurs (31, 32) mobiles le long d'une direction perpendiculaire au plan d'appui (2) entre une position active, dans laquelle les deux presseurs (31, 32) pressent les parties terminales (A, B) en contact avec le plan d'appui (2) bloquant ainsi ces dernières, et une position inactive, dans laquelle lesdits presseurs (31, 32) ne pressent pas les parties d'extrémité (A, B) en contact avec le plan d'appui (2).

5. Procédé de soudage des parties d'extrémité (A, B) de deux bandes à assembler l'une à l'autre par rapport aux bords d'extrémité (AS, BS), comprenant les étapes suivantes :
- bloquer les parties d'extrémité (A, B) sur un plan d'appui (2) avec les bords d'extrémité (AS, BS) juxtaposés et parallèles l'un à l'autre à une distance déterminée ; le procédé étant **caractérisé par** les étapes suivantes :
- disposer deux éléments de contenance (51, 52) en contact avec les bords latéraux opposés des parties d'extrémité (A, B) chevauchant les bords d'extrémité (AS, BS) ;
- souder les parties d'extrémité (A, B) le long des bords d'extrémité (AS, BS) sur toute la longueur des bords d'extrémité (AS, BS), incluant les zones latérales étant en contact avec les éléments de contenance (51, 52) ;
dans lequel chaque élément de contenance (51, 52) comprend : un insert (51a, 52a) prévu pour être positionné en contact avec les bords latéraux des parties d'extrémité (A, B), chevauchant les bords d'extrémités (AS, BS) ; un actionneur (61, 62) prédisposé pour déplacer l'insert (51a, 52a) entre une position active et une position inactive, dans lequel l'insert (51a, 52a) est distant des parties d'extrémité (A, B) ; le procédé étant de plus
**caractérisé en ce que** chaque élément de contenance (51, 52) comprend un élément de fixation (71, 72) associé à l'actionneur (61, 62) auquel l'insert (51a, 52a) est associé de façon amovible, ledit élément de fixation (71, 72) étant orientable dans l'espace de manière à permettre à l'insert (51a, 52a) d'être disposé parallèlement aux bords latéraux des parties d'extrémité (A, B).

6. Procédé selon la revendication précédente, comprenant une étape consistant à détacher les éléments de contenance (51, 52) des parties d'extrémité (A, B), après l'étape de soudage.
